# FASCICULE DE BREVET EUROPEEN

(11) **EP 2 678 566 B1**
(45) Date de publication et mention de la délivrance du brevet: **06.03.2019**
(21) Numéro de dépôt: 12707472.2
(22) Date de dépôt: 14.02.2012
(51) Int. Cl.: F04C 23/00, F04C 29/02, F04C 29/04, F04B 39/02, F04D 29/063, F04D 29/059, F04D 29/056, H02K 9/19, H02K 7/14, F16C 33/66, H02K 7/08

(54) **DISPOSITIF DE LUBRIFICATION D'UN ROULEMENT SECONDAIRE DANS UN COMPRESSEUR ÉLECTRIQUE**
VORRICHTUNG ZUM SCHMIEREN EINES SEKUNDÄRLAGERS BEI EINEM ELEKTRISCHEN VERDICHTER
DEVICE FOR LUBRICATING A SECONDARY BEARING IN AN ELECTRIC COMPRESSOR

(30) Priorité: 22.02.2011 FR 1100519
(43) Date de publication de la demande: 01.01.2014
(73) Titulaire: Valeo Japan Co., Ltd., Saitama 360-0193 (JP)
(72) Inventeur: GUITARI, Imed, 78990 Elancourt (FR)
(74) Mandataire: Neuviale, Bertrand
(86) Numéro de dépôt international: PCT/EP2012/000644
(87) Numéro de publication internationale: WO 2012/113517

(56) Documents cités:
- EP-A1- 1 662 141
- EP-A1- 2 244 354
- US-B2- 6 733 251

## Description

Le secteur technique de la présente invention est celui des compresseurs constitutifs d'un circuit de fluide réfrigérant équipant un véhicule automobile.

Le fluide réfrigérant est classiquement mis en circulation à l'intérieur d'un circuit de climatisation par l'intermédiaire d'un compresseur. Dans les véhicules équipés d'un moteur à combustion interne, ce compresseur est de type mécanique car sa rotation est entraînée au moyen d'une poulie reliée au moteur à combustion interne par une courroie.

Le nombre de véhicules hybrides, c'est-à-dire à moteur à combustion interne couplé à un moteur électrique, ou tout électrique, c'est-à-dire exclusivement propulsé par un moteur électrique, est en constante augmentation du faite de la raréfaction des énergies fossiles qui alimentent les véhicules équipés de moteur à combustion interne.

L'énergie mécanique fournie habituellement par le moteur à combustion interne est donc moins disponible ou complètement indisponible pour le cas des véhicules tout électrique.

Pour palier cette situation, il est connu d'utiliser un compresseur dit « électrique » en ce sens que son mécanisme de compression est entrainé par un moteur électrique intégré dans le compresseur. Le lien mécanique entre le moteur électrique et le mécanisme de compression est réalisé par un arbre d'entraînement monté en rotation dans le boîtier au moyen de deux liaisons pivots.

La lubrification de ces liaisons pivots est assurée par la présence d'un lubrifiant, ce dernier circulant dans le volume interne du compresseur au contact des liaisons pivots.

Un inconvénient de ce type de compresseur électrique réside dans la position de la tubulure d'entrée du fluide réfrigérant dans le compresseur. Cette position conditionne la bonne lubrification de la liaison pivot la plus proche de la tubulure d'entrée. Or, la vitesse du fluide réfrigérant entrant dans le compresseur combiné à sa forme cylindrique génère un effet cyclonique qui centrifuge le lubrifiant. Une telle situation conduit à une détérioration de la liaison pivot immédiatement adjacente à la tubulure d'entrée par absence de lubrification.

Les demandes de brevet et brevets EP 1 662 141, US 6 733 251 et EP 2 244 354 décrivent des compresseurs.

Le but de la présente invention est donc de résoudre l'inconvénient décrit ci-dessus principalement en mettant en place un moyen pour capter le lubrifiant présent dans le fluide réfrigérant au voisinage de la tubulure d'entrée du compresseur, ce moyen formant une barrière à l'encontre du lubrifiant tout en limitant l'effet cyclonique afin d'atteindre un compromis entre perte de charge interne du compresseur et suffisance de la lubrification de la liaison pivot immédiatement adjacente à la tubulure d'entrée.

L'invention a donc pour objet un compresseur selon la revendication 1.

Le boîtier peut être formé par un élément unitaire ou être réalisé à partir de l'assemblage de plusieurs sous-ensembles, ci-après dénommés portion. Les liaisons pivot sont notamment des roulements, et la liaison pivot secondaire est formée dans l'épaisseur de la paroi ou déborde de cette dernière, ce débord étant formé par une bague annulaire. La paroi délimite le circuit d'admission du fluide en ce sens qu'elle canalise ce fluide quand il entre dans le compresseur. Le fluide est ainsi en mouvement le long de la paroi. Autrement dit, il lèche cette paroi pendant son mouvement dans le circuit d'admission. Le moyen de lubrification a pour fonction de capter les particules ou gouttes de lubrifiant présent dans le fluide qui entre dans le compresseur et qui forme par exemple un film, et de canaliser ces particules ou gouttes vers la liaison pivot secondaire.

Selon une première caractéristique de l'invention, le moyen de lubrification comprend un dispositif de captage d'un lubrifiant présent dans le fluide, ledit dispositif de captage débouchant ou débordant d'une face de la paroi délimitant le circuit d'admission. Cette zone de captage constitue un endroit où le lubrifiant s'accumule.

Selon une deuxième caractéristique de l'invention, le moyen de lubrification comprend un dispositif de canalisation qui conduit le lubrifiant du dispositif de captage à la liaison pivot secondaire.

Selon une autre caractéristique de l'invention, le dispositif de captage est formé par un obstacle placé transversalement dans le circuit d'admission. Le fluide vient ainsi frappé contre l'obstacle et le lubrifiant adhère à cet obstacle pour s'écouler vers une zone de captage.

Selon encore une caractéristique de l'invention, le compresseur prévoit une zone de captage délimitée d'un côté par la face de la paroi et l'obstacle, et de l'autre par une portion ouverte sur le circuit d'admission.

Selon encore une autre caractéristique de l'invention, le dispositif de canalisation est formé par un canal pratiqué dans la paroi.

La paroi comprend une bague annulaire dans laquelle est logée la liaison pivot secondaire, ledit canal étant réalisé au travers de la bague annulaire.

Avantageusement, le canal comprend un orifice d'entrée placé entre l'obstacle et un orifice d'admission réalisé dans le boîtier et par lequel débute ou commence le circuit d'admission. L'orifice d'entrée est installé dans la zone de captage.

De manière complémentaire, l'orifice d'admission s'étend selon un axe, avantageusement rectiligne, et l'arbre s'étend selon un axe longitudinal, l'axe de l'orifice d'admission ne croisant pas l'axe longitudinal. Le fluide qui pénètre dans le volume du compresseur suit ainsi une paroi cylindrique de ce dernier et longe la paroi en suivant, suivant ainsi une trajectoire en rotation autour de la liaison pivot secondaire.

Avantageusement encore, le canal comprend un orifice de sortie qui débouche dans une chambre délimitée d'un côté par la liaison pivot secondaire et l'arbre, et de l'autre par la paroi.

Dans une variante intéressante de l'invention, l'orifice d'entrée est placé au dessus de l'orifice de sortie selon une direction verticale. On utilise ainsi l'effet de la gravité pour que le lubrifiant descende naturellement vers la liaison pivot secondaire. L'avantage d'une telle disposition réside dans la simplicité de mise en oeuvre.

Selon une première caractéristique de l'invention, le volume reçoit un moteur électrique.

De manière complémentaire, le moteur électrique est installé entre un mécanisme de compression et un dispositif de commande dudit moteur, tous deux montés ou solidarisés, directement ou indirectement, sur ou dans le boîtier. En d'autres termes, le compresseur de l'invention est un ensemble unitaire qui intègre le mécanisme de compression, le moteur électrique et le dispositif de commande installés selon cet ordre et empilés selon un axe longitudinal du compresseur.

Un tout premier avantage selon l'invention réside dans la possibilité d'apporter simplement une quantité d'huile nécessaire au bon fonctionnement de la liaison pivot secondaire malgré la vitesse d'entrée élevée du fluide réfrigérant à l'intérieur du compresseur.

Un autre avantage réside dans le compromis entre perte de charge d'un côté, et efficacité de la lubrification de l'autre, que la solution selon l'invention permet d'obtenir.

D'autres caractéristiques, détails et avantages de l'invention ressortiront plus clairement à la lecture de la description donnée ci-après à titre indicatif en relation avec des dessins dans lesquels :
- la figure 1 est une vue en coupe du compresseur selon l'invention,
- la figure 2 est un agrandissement de la figure 1 au niveau de la liaison pivot secondaire,
- la figure 3 est une vue perspective d'une variante de réalisation d'un boîtier du compresseur recevant le moyen de lubrification.

Il faut noter que les figures exposent l'invention de manière détaillée pour mettre en oeuvre l'invention, lesdites figures pouvant bien entendu servir à mieux définir l'invention le cas échéant.

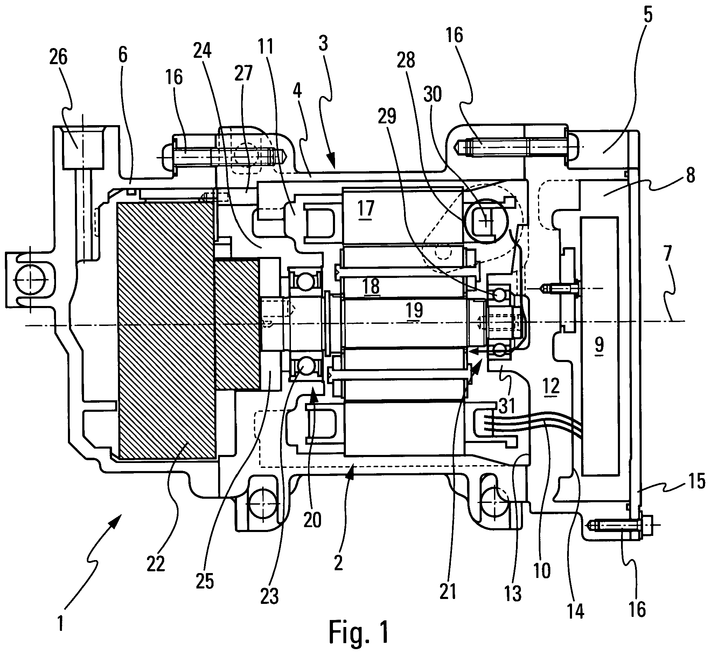

La figure 1 illustre un exemple de réalisation d'un compresseur 1 qualifié « d'électrique », car il renferme un moteur électrique 2. Ce compresseur 1 est un composant d'une boucle de climatisation à l'intérieur de laquelle circule un fluide, notamment réfrigérant. Le compresseur 1 assure la mise en circulation et l'augmentation de pression du fluide réfrigérant nécessaire au bon fonctionnement d'un cycle thermodynamique qui prend place au coeur de la boucle de climatisation.

Le compresseur 1 comprend un boîtier 3 qui, dans l'exemple représenté, comprend une portion centrale 4, une première portion extrémale 5 et une deuxième portion extrémale 6 placées à chaque extrémité de la portion centrale 4 selon une direction axiale référencée 7, autrement appelée axe longitudinal.

La première portion extrémale 5 forme un élément structurel du compresseur en ce sens qu'il obture ou ferme une première extrémité de la portion centrale 4. Cette première portion extrémale 5 présente un évidement 8 qui forme une cavité de réception d'un module ou dispositif de commande 9 qui commande et contrôle les paramètres de fonctionnement du moteur électrique 2. Ce contrôle est opéré au moyen d'une liaison électrique 10, notamment par un câble constitué ici de trois brins conducteurs pour transporter un courant alternatif triphasé du module de commande 9 vers le moteur 2.

Le fond de la cavité 8 ferme un volume 11 du boîtier, qui peut être qualifié « d'interne » en ce sens qu'il s'agit d'une zone située à l'intérieur du compresseur.

Ce fond forme ainsi une paroi 12 qui s'étend dans un plan perpendiculaire à l'axe longitudinal 7. Cette paroi comprend deux faces, c'est-à-dire une face interne 13 tournée vers le volume 11 du compresseur et une face externe 14 tournée vers le milieu environnant le compresseur 1. La cavité 8 est fermée, par exemple, par un couvercle 15 et solidarisée sur la première portion extrémale 5 au moyen d'un assemblage vissé 16. On notera que la première portion extrémale 5 est rapportée et solidarisée sur la portion centrale 4 également au moyen d'un montage vissé 16.

La portion centrale 4 présente une forme globalement cylindrique et sert de logement de réception au moteur électrique 2. Ce dernier comprend un stator 17 monté solidaire de la portion centrale 4 et un rotor 18 qui tourne au centre du stator.

Un arbre 19 est rendu solidaire du rotor 18 et se trouve soutenu dans le compresseur par une liaison pivot primaire 20 et une liaison pivot secondaire 21, placées de part et d'autre du rotor 18. L'arbre 19 s'étend alors selon un axe qui est confondu avec l'axe longitudinal 7. Les liaisons pivots référencées 20 et 21 sont distinguées par les qualificatifs « primaire » et « secondaire » en raison de l'importance qu'ils revêtent au sein du compresseur. La liaison pivot primaire 20 présente un diamètre externe plus important que le diamètre externe de la liaison pivot secondaire. La liaison pivot est primaire en ce sens qu'elle subit plus d'effort mécanique que la liaison pivot secondaire. On peut également reconnaître une liaison pivot primaire par rapport à une liaison pivot secondaire en ce que la liaison pivot primaire est installée entre le moteur électrique 2 et un mécanisme de compression 22 constitutif du compresseur.

La liaison pivot primaire 20 est par exemple réalisée au moyen d'un palier lisse ou d'un roulement 23 à aiguilles ou à billes, comme c'est le cas de la figure 1. Ce roulement 23 à billes est reçu à l'intérieur d'une cage pratiquée dans un flasque 24 fabriqué conjointement ou indépendamment de la portion centrale 4 et qui s'étend dans un plan orthogonal à l'axe longitudinal 7, et parallèle au plan d'extension de la paroi 12.

L'arbre 19 monté sur son roulement principale 23 traverse le flasque 24 et débouche dans un logement 25 délimité d'un côté par le flasque 24, et de l'autre par le mécanisme de compression 22. La deuxième portion extrémale 6 forme une cuvette de réception du mécanisme de compression 22 et présente un orifice d'évacuation 26 pratiqué au travers d'une paroi de la portion extrémale 6, de sorte à autoriser l'expulsion du fluide réfrigérant après compression. On notera que le mécanisme de compression 22 est alimenté en fluide réfrigérant par un trou 27 qui traverse le flasque 24. Autrement dit, il met en communication le volume 11 avec le mécanisme de compression 22. Avantageusement, le flasque 24 peut comprendre une pluralité de trous 27, par exemple répartie à sa périphérie externe et à proximité de la portion centrale 4. La deuxième portion extrémale 6 est montée à l'extrémité de la portion centrale 4 qui présente le flasque 24, par une liaison vissée 16 notamment.

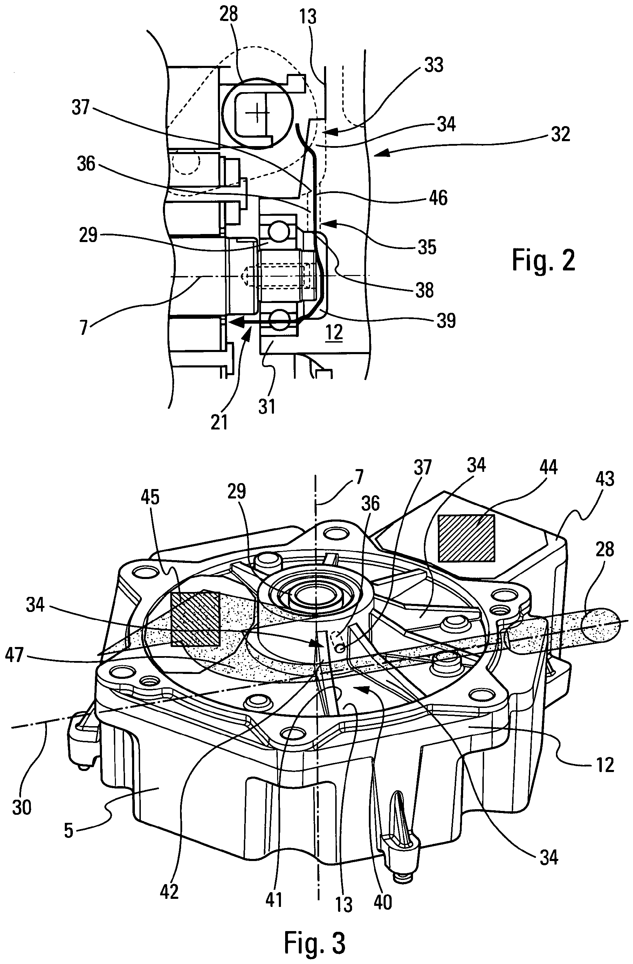

La portion centrale 4 comprend un orifice d'admission 28 qui permet au fluide réfrigérant de pénétrer à l'intérieur du volume 11. Cet orifice d'admission 28 est par exemple formé sur une paroi périphérique de la portion centrale, entre le moteur électrique 2 et l'extrémité de la portion centrale 4 qui reçoit la première portion extrémale 5. Le compresseur 1 est ainsi le siège d'une circulation de fluide réfrigérant qui débute au niveau de l'orifice d'admission 28, se propage le long de la paroi 12 (voir figure 3) puis dans le moteur 2 pour passer dans le trou 27 et rejoindre le mécanisme de compression 22. Une telle circulation est appelée circuit d'admission (référencé 47 sur la figure 3) qui canalise le fluide réfrigérant à l'intérieur du compresseur, notamment en amont du mécanisme de compression 22 selon le sens de déplacement du fluide réfrigérant.

On notera que l'orifice d'admission 28 s'étend selon un axe rectiligne 30 incliné par rapport à l'axe longitudinal 7 du compresseur, avantageusement de manière perpendiculaire. De plus, l'axe 30 le long duquel s'étend l'orifice d'admission 28 ne croise pas l'axe longitudinal 7 si bien qu'il se créé une circulation rotative au niveau du circuit d'admission du compresseur puisque le fluide réfrigérant longe la paroi 12 en tournant autour de la liaison pivot secondaire 21. Cette dernière est mise en oeuvre par exemple par un palier lisse qui reçoit l'extrémité de l'arbre 19. Dans l'exemple de la figure 1, il s'agit d'un roulement 29 à billes mais il peut également s'agir d'un roulement à aiguilles.

La paroi 12 comprend une bague annulaire 31 dans laquelle est logée la liaison pivot secondaire 21, en particulier le roulement 29 à billes. Cette bague annulaire débouche ou déborde de la face interne 13 en direction du moteur électrique 2.

La figure 2 montre en détail le moyen de lubrification 32 de la liaison pivot secondaire 21. Le fluide réfrigérant qui circule dans le circuit d'admission est un mélange d'un composé chimique (R134a, R152a, HFO1234YF) ou naturel (dioxyde de carbone) avec un lubrifiant de type PAG, par exemple. Le moyen de lubrification 32 assure le captage, ou la séparation du lubrifiant vis-à-vis d'un composé chimique ou naturel, au moyen d'un dispositif de captage 33 qui s'étend sur la paroi 12. Le dispositif de captage 33 est une forme qui fait saillie dans le circuit d'admission et qui prend naissance sur la face interne 13 de la paroi 12. En pratique, cette forme est un obstacle qui s'étend transversalement au circuit d'admission, par exemple parallèlement selon l'axe longitudinal 7 dans une première dimension et radialement par rapport à cet axe longitudinal 7 dans une deuxième dimension. Cet obstacle est par exemple opéré par une nervure 34 qui est issue de la face interne 13 et de la bague annulaire 31 mais il peut également s'agir d'un épaulement pratiqué sur la face interne 13. Cette nervure 34 s'étend radialement par rapport à l'axe longitudinal 7 sur un secteur angulaire.

Le fluide réfrigérant contenant le lubrifiant vient frapper contre le dispositif de captage 33 et s'accumule ainsi sur la paroi de la nervure 34. Cette accumulation permet au lubrifiant de longer la nervure 34 en direction de la bague annulaire 31 pour rejoindre une zone de captage où le lubrifiant s'accumule.

Le moyen de lubrification 32 est complété par un dispositif de canalisation 35 dont la fonction est de canaliser le lubrifiant depuis le dispositif de captage 33 jusqu'à la liaison pivot secondaire 21, en particulier le roulement 29 à billes. Un exemple de réalisation du dispositif de canalisation 35 est illustré sur cette figure. Il s'agit d'un canal ou conduit 36 de section cylindrique, qui présente un orifice d'entrée 37 et un orifice de sortie 38 et qui circule au travers de la paroi 12, et plus particulièrement au travers de la bague annulaire 31.

L'orifice d'entrée 37 est formé sur la face interne 13 de la paroi 12 et met en communication le volume 11 avec le canal 36. L'orifice de sortie 38 met en communication le canal 36 avec une chambre 39 pratiquée entre la liaison pivot secondaire 21 et la paroi 12. De manière plus précise, cette chambre 39 est délimitée d'un côté par le roulement 29 à billes et l'arbre 19, et de l'autre par la face interne 13 de la paroi 12. On notera enfin que l'orifice d'entrée 37 est placé au dessus de l'orifice de sortie 38 selon une direction verticale, ce qui permet au lubrifiant de descendre vers le roulement 29 à billes par l'effet de la gravité.

Le déplacement du lubrifiant est symbolisé sur la figure 2 par une flèche référencée 46.

Dans cet exemple de réalisation, le canal 36 est fermé par rapport au volume 11, en dehors de l'orifice d'entrée 37, mais il va de soi que le moyen de canalisation 35 peut également être formé par une gorge réalisée dans la paroi 12 et/ou dans la bague annulaire 31, cette gorge étant ouverte vers le volume 11 sur tout ou partie de sa longueur.

La figure 3 montre la première portion extrémale 5 du compresseur. La portion centrale n'est pas représentée mais l'orifice d'entrée 28 du fluide réfrigérant dans le compresseur ainsi que son axe d'extension 30 sont symbolisés sur cette figure. Une flèche référencée 47 illustre encore le circuit d'admission où le fluide réfrigérant circule.

Dans cette exemple de réalisation, la face interne 13 de la paroi 12 donne naissance à une multiplicité de nervures 34 qui s'étendent radialement par rapport à l'axe longitudinal 7. Une zone de captage 40 est matérialisée en amont d'une première nervure 34a, cette zone de captage étant délimitée par une face 41. On notera qu'il existe autant de zones de captage que de nervures issues de la paroi 12, ce qui permet de collecter plus efficacement le lubrifiant.

Du côté du conduit d'admission 47, la zone de captage 40 est bordée par un plan qui passe par un sommet 42 de la nervure 34a. Le lubrifiant est ainsi accumulé dans la zone de captage 40 alors que celle-ci communique avec le canal 36 par l'orifice d'entrée 37. Le lubrifiant est alors naturellement conduit ou canalisé vers le roulement 29 à billes en passant entre ce dernier et la paroi 12.

On notera enfin que la première portion extrémale 5 comprend une excroissance 43 qui reçoit un connecteur électrique d'alimentation 44 représenté ici de manière schématique. Ce connecteur électrique d'alimentation 44 permet à un courant électrique continu d'arriver jusqu'au dispositif ou module de commande du moteur électrique.

La paroi 12 comprend encore un connecteur électrique intermédiaire 45 voué à assurer une liaison électrique entre le dispositif de commande monté dans la première portion extrémale 5 et le moteur électrique monté dans la portion centrale du boîtier formant le compresseur 1.

## Revendications

1. Compresseur (1) comprenant un boîtier (3) délimitant un circuit d'admission (47) apte à canaliser un fluide et formant un volume (11) dans lequel s'étend un arbre (19) supporté par une liaison pivot principale (20) et par une liaison pivot secondaire (21), ladite liaison pivot secondaire (21) étant montée sur une paroi (12) délimitant le circuit d'admission (47), le compresseur comprenant un moyen de lubrification (32) de la liaison pivot secondaire (21) installée sur ladite paroi (12), **caractérisé en ce que** le moyen de lubrification (32) comprend un dispositif de captage (33) d'un lubrifiant présent dans le fluide, ledit dispositif de captage (33) débouchant d'une face (13) de la paroi (12) délimitant le circuit d'admission (47).

2. Compresseur selon la revendication 1, dans lequel le moyen de lubrification (32) comprend un dispositif de canalisation (35) qui conduit le lubrifiant du dispositif de captage (33) à la liaison pivot secondaire (21).

3. Compresseur selon la revendication 1 ou 2, dans lequel le dispositif de captage (33) est formé par un obstacle placé transversalement dans le circuit d'admission (47).

4. Compresseur selon la revendication 3, dans lequel est prévue une zone de captage (40) délimitée d'un côté par la face (13) de la paroi (12) et l'obstacle et de l'autre par une portion ouverte sur le circuit d'admission (47).

5. Compresseur selon la revendication 3 ou 4, dans lequel le dispositif de canalisation (32) est formé par un canal (36) pratiqué dans la paroi (12).

6. Compresseur selon la revendication 5, dans lequel la paroi (12) comprend une bague annulaire (31) dans laquelle est logée la liaison pivot secondaire (21), ledit canal (36) étant réalisé au travers de la bague annulaire (31).

7. Compresseur selon l'une quelconque des revendications 5 à 6, dans lequel le canal (36) comprend un orifice d'entrée (37) placé entre l'obstacle et un orifice d'admission (28) réalisé dans le boîtier (3) et par lequel débute le circuit d'admission (47).

8. Compresseur selon la revendication 7, dans lequel l'orifice d'admission (28) s'étend selon un axe (30) et l'arbre (19) s'étend selon un axe longitudinal (7), l'axe (30) de l'orifice d'admission (28) ne croisant pas l'axe longitudinal (7).

9. Compresseur selon l'une quelconque des revendications 7 à 8, dans lequel le canal (36) comprend un orifice de sortie (38) qui débouche dans une chambre (39) délimitée d'un côté par la liaison pivot secondaire (21) et l'arbre (19) et de l'autre par la paroi (12).

10. Compresseur selon la revendication 9, dans lequel l'orifice d'entrée (37) est placé au dessus de l'orifice de sortie (38) selon une direction verticale.

11. Compresseur selon l'une quelconque des revendications précédentes, dans lequel le volume (11) reçoit un moteur électrique (2).

12. Compresseur selon la revendication 11, dans lequel le moteur électrique (2) est installé entre un mécanisme de compression (22) et un dispositif de commande (9) dudit moteur électrique, tous deux montés sur le boîtier (3).

## Patentansprüche

1. Kompressor (1) mit einem Gehäuse (3), das einen Ansaugkreis (47) begrenzt, der ein Fluid leiten kann, und ein Volumen (11) bildet, in dem sich eine Welle (19) erstreckt, die von einer Hauptschwenkverbindung (20) getragen wird eine sekundäre Schwenkverbindung (21), wobei die sekundäre Schwenkverbindung (21) an einer den Ansaugkreis (47) begrenzenden Wand (12) angebracht ist, wobei der Kompressor eine Schmiereinrichtung (32) zum Schmieren der installierten sekundären Schwenkverbindung (21) aufweist an der Wand (12), **dadurch gekennzeichnet, dass** die Schmiermittel (32) eine Aufnahmevorrichtung (33) zum Aufnehmen eines in der Flüssigkeit vorhandenen Schmiermittels aufweisen, wobei die Aufnahmevorrichtung (33) aus einer Fläche (13) der den Ansaugkreis (47) begrenzenden Wand (12) austritt.

2. Kompressor nach Anspruch 1, bei dem die Schmiermittel (32) eine Kanalisierungsvorrichtung (35) aufweisen, die das Schmiermittel von der Aufnahmevorrichtung (33) zu der sekundären Schwenkverbindung (21) befördert.

3. Kompressor nach Anspruch 1 oder 2, bei dem die Aufnahmevorrichtung (33) durch ein Hindernis gebildet wird, das quer im Einlasskreis (47) positioniert ist.

4. Kompressor nach Anspruch 3, bei dem eine Aufnahmezone (40) vorhanden ist, die einerseits durch die Stirnfläche (13) der Wand (12) und das Hindernis und andererseits durch einen zum Einlass offenen Abschnitt begrenzt ist Schaltung (47).

5. Kompressor nach Anspruch 3 oder 4, bei dem die Kanalisierungsvorrichtung (32) aus einem Kanal (36) besteht, der in der Wand (12) ausgebildet ist.

6. Kompressor nach Anspruch 5, bei dem die Wand (12) einen ringförmigen Ring (31) aufweist, in dem die sekundäre Schwenkverbindung (21) untergebracht ist, wobei der Kanal (36) durch den ringförmigen Ring (31) hergestellt ist.

7. Kompressor nach einem der Ansprüche 5 und 6, bei dem der Kanal (36) eine Einlassöffnung (37) aufweist, die zwischen dem Hindernis und einer Einlassöffnung (28) angeordnet ist, die in das Gehäuse (3) eingebracht ist und über die der Einlass erfolgt Schaltung (47) beginnt

8. Kompressor nach Anspruch 7, bei dem sich die Einlassöffnung (28) entlang einer Achse (30) und die Welle (19) entlang einer Längsachse (7) erstreckt, wobei die Achse (30) der Einlassöffnung (28) liegt. die Längsachse (7) nicht schneidet..

9. Kompressor nach einem der Ansprüche 7 und 8, bei dem der Kanal (36) eine Auslassöffnung (38) aufweist, die in eine Kammer (39) mündet, die einseitig durch die sekundäre Schwenkverbindung (21) und die Welle begrenzt ist (19) und zum anderen an der Wand (12).

10. Kompressor nach Anspruch 9, bei dem die Einlassöffnung (37) in vertikaler Richtung oberhalb der Auslassöffnung (38) angeordnet ist.

11. Kompressor nach einem der vorhergehenden Ansprüche, bei dem das Volumen (11) einen Elektromotor (2) beherbergt.

12. Kompressor nach Anspruch 11, bei dem der Elektromotor (2) zwischen einem Kompressionsmechanismus (22) und einer Steuervorrichtung (9) zum Steuern des Elektromotors installiert ist, wobei beide an dem Gehäuse (3) montiert sind.

## Claims

1. A compressor (1) comprising a housing (3) delimiting an intake circuit (47) able to channel a fluid and forming a volume (11) in which there extends a shaft (19) supported by a main pivot connection (20) and by a secondary pivot connection (21), said secondary pivot connection (21) being mounted on a wall (12) delimiting the intake circuit (47), the compressor comprising a lubrication means (32) for lubricating the secondary pivot connection (21) installed on said wall (12), **characterized in that** the lubrication means (32) comprises a pick-up device (33) for picking up a lubricant present in the fluid, said pick-up device (33) emerging from a face (13) of the wall (12) delimiting the intake circuit (47) .

2. The compressor as claimed in claim 1, in which the lubrication means (32) comprises a channeling device (35) which conveys the lubricant from the pick-up device (33) to the secondary pivot connection (21).

3. The compressor as claimed in claims 1 or 2, in which the pick-up device (33) is formed by an obstacle positioned transversely in the intake circuit (47).

4. The compressor as claimed in claim 3, in which there is a pick-up zone (40) delimited on one side by the face (13) of the wall (12) and the obstacle and on the other by a portion open to the intake circuit (47).

5. The compressor as claimed in claim 3 or 4, in which the channeling device (32) is formed of a duct (36) made in the wall (12).

6. The compressor as claimed in claim 5, in which the wall (12) comprises an annular ring (31) in which the secondary pivot connection (21) is housed, said duct (36) being made through the annular ring (31).

7. The compressor as claimed in either one of claims 5 and 6, in which the duct (36) comprises an inlet orifice (37) placed between the obstacle and an intake orifice (28) made in the housing (3) and via which the intake circuit (47) begins.

8. The compressor as claimed in claim 7, in which the intake orifice (28) extends along an axis (30) and the shaft (19) extends along a longitudinal axis (7), the axis (30) of the intake orifice (28) not intersecting the longitudinal axis (7).

9. The compressor as claimed in either one of claims 7 and 8, in which the duct (36) comprises an outlet orifice (38) which opens into a chamber (39) delimited on one side by the secondary pivot connection (21) and the shaft (19) and on the other by the wall (12).

10. The compressor as claimed in claim 9, in which the inlet orifice (37) is placed above the outlet orifice (38) in a vertical direction.

11. The compressor as claimed in any one of the preceding claims, in which the volume (11) houses an electric motor (2).

12. The compressor as claimed in claim 11, in which the electric motor (2) is installed between a compression mechanism (22) and a control device (9) for controlling said electric motor, both these being mounted on the housing (3).
